(19) Europäisches Patentamt
European Patent Office
Office européen des brevets

(11) EP 0 927 572 B1

(12) EUROPEAN PATENT SPECIFICATION

(45) Date of publication and mention of the grant of the patent:
**17.09.2008 Bulletin 2008/38**

(21) Application number: **98124331.4**

(22) Date of filing: **21.12.1998**

(51) Int Cl.:
***B01D 71/68*** *(2006.01)*
***B01D 67/00*** *(2006.01)*
***B01D 69/08*** *(2006.01)*
***B01D 61/24*** *(2006.01)*
***D01D 5/247*** *(2006.01)*
***A61M 1/18*** *(2006.01)*

(54) **A polysulfone based hollow fiber membrane, and a process for preparing the same**

Polysulfonhohlfasermembran und deren Herstellungsverfahren

Membrane sous forme de fibre creuse et son procédé de préparation

(84) Designated Contracting States:
**DE ES FR IT**

(30) Priority: **30.12.1997 KR 9779118**
**30.12.1997 KR 9779120**

(43) Date of publication of application:
**07.07.1999 Bulletin 1999/27**

(73) Proprietor: **KOLON INDUSTRIES, INC.**
**Kwacheon-city,**
**Kyunggi-do 427-040 (KR)**

(72) Inventors:
- **Shin, He Kuk**
**Seoungnam-city,**
**Kyunggi-do (KR)**
- **Hu, Chul**
**Yongin-city,**
**Kyunggi-do (KR)**

(74) Representative: **TER MEER - STEINMEISTER & PARTNER GbR**
**Patentanwälte**
**Mauerkircherstrasse 45**
**81679 München (DE)**

(56) References cited:
**EP-A- 0 168 783**
**EP-A- 0 568 045**
**US-A- 5 049 276**

- **DATABASE WPI Section Ch, Week 8548 Derwent Publications Ltd., London, GB; Class A26, AN 85-299477 XP002100265 & JP 60 206416 A (TOYO SODA MFG CO LTD) , 18 October 1985**
- **DATABASE WPI Section Ch, Week 9715 Derwent Publications Ltd., London, GB; Class A14, AN 97-163184 XP002100266 & KR 9 507 322 B (KOREA RES INST CHEM TECHNOLOGY), 10 July 1995**

EP 0 927 572 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

BACKGROUND OF THE INVENTION

1. Field of the Invention

The present invention relates to a polysulfone based hollow fiber membrane as defined in claim 7 and a process for preparing the same as defined in claim 1.

A large number of researches on the material of separation membranes having selective permeability have been made, and celluloses, polyamides, polyacryls and polyvinyls have been developed as the membrane material and practically are in use. These materials, however, have drawbacks such as bio-compatibility, chemical resistance, and heat resistance. In order to prevent these drawbacks, studies on adopting resins used for engineering plastics as separation membrane have been made, and engineering plastic resin like polysulfone based is in use as a material for separation membranes. Since the polysulfone based resin has excellent properties such as bio-compatibility, chemical resistance, heat resistance, flame resistance, and mechanical characteristics, it is widely used as a membrane material for hemodialysis, micro filtration, ultra filtration, reverse osmosis, and gas separation.

Generally speaking, polysulfone hollow fiber membranes are produced by spinning the Spinning Dope composed of polysulfone resin, organic solvent and additives such as water, soluble polymer, and internal coagulating liquid into air through a biannular spinning nozzle to obtain an extrudate in the form of a hollow fiber, and then coagulating the extrudate by an external coagulating liquid.

In the process of producing the Spinning Dope, m-cresol, N-methyl-2-pyrrolidone, dimethyl sulfoxide, dimethyl acetamide, dimethyl formamide and mixtures thereof are used as solvent.

The water soluble polymers are selected from polyethylene glycol, polyvinyl alcohol, polyvinyl pyrrolidone and mixtures thereof.

Though water is usually used for both, the internal and external coagulating liquid, a water solution comprising the said additives could be used for both, the internal and external coagulating liquid.

2. Description of the Prior Art

In respect to membranes, in general, the most important two properties are the capability of eliminating more than a certain molecular weight of separation material (hereinafter called "separation capability") and permeability, but these two properties are not mutually compatible: if separation capability goes up, then permeability goes down relatively, and if permeability needs to be increased, then separation capability is lowered. Therefore, an important task of developing membrane is to produce a membrane which has a certain separation capability and higher permeability at the same time.

First of all, in order to improve the permeability of a membrane, many large pores should be formed in the membrane. In addition, in order to elevate the separation capability of a membrane while it maintains a certain permeability, the size of the pores formed in the membrane must be similar.

Up to date, several methods, like adding water soluble polymer, solvent and/or alcohol compound in the internal coagulating liquid and/or external coagulating liquid, have been used to form pores in the membrane. These methods, however, can not support to form similar sized pores so as to meet the required certain level of separation capacity and permeability in hemodialysis membranes.

In the mean time, if the said water soluble polymer being added into the Spinnig Dope, remains quite a lot in the hollow fiber membrane after the spinning process, the permeability, without deterioration in separation capability, shall be improved because of the elevated hydrophilicity of the hollow fiber membrane. In fact, after the spinning process, most of the water soluble polymer leaks to the outside of the hollow fiber membrane during the coagulating and washing processes, and there remains a little in the inside of the hollow fiber membrane because of its' high solubility in water.

U.S.-A-5,340,480 (& EP-A-0 568 045) discloses that a water solution containing polyvinyl pyrrolidone shall be applied as internal coagulation liquid in order to leave polyvinyl pyrrolidone (hereinafter called "PVP"), the water soluble polymer, in the surface of the hollow fiber membrane for improvement of permeability, but the efficiency is insignificant. The internal coagulation liquid can optionally comprise a salt, such as lithium chloride, zinc chloride and sodium nitrate.

Japanese Patent Laid-Open No. 58-104940 discloses the use of a cross linking agent for fixing a water soluble polymer to the surface of a polysulfone hollow fiber membrane, but the process and operation is very complicated.

Japanese Patent Laid-Open Nos. 63-97205 and 63-97634 disclose the use of heat treatment or radiation treatment for fixing a water soluble polymer to the surface of a polysulfone hollow fiber membrane, but the process is complicated and it requires expensive equipment.

Furthermore, US-A-5 049 276 discloses hollow fiber membranes made for example from a polysulfone polymer wherein diethylene glycol, next to a number of other compounds, can form or being part of the internal or external coagulation liquid.

Therefore, in order to improve the separation capability and permeability of the membrane at the same time, following techniques have been required to be developed:

1. A technique to form a similar size of pores in the membrane, and
2. A technique simply and effectively to leave water soluble polymer which was added to the Spinning Dope, in the hollow fiber membrane.

The present invention relates to the production of a polysulfone based hollow fiber membrane comprising excellent separation capability, permeability and high water permeability coefficient by forming many similar-sized pores in a polysulfone based hollow fiber membrane and by leaving a lot of PVP, the water soluble polymer, inside of the membrane.

SUMMARY OF THE INVENTION

The present invention relates to a polysulfone based hollow fiber membrane mainly for hemodialysis, and a process for preparing the same.
More particularly, the present invention relates to a process of producing a polysulfone based hollow fiber membrane as defined in claim 1.
The present invention also relates to a polysulfone based hollow fiber membrane as defined in claim 7.
The properties of the polysulfone based hollow fiber membrane of the present invention are dependent on the quantity of DEG and salt which can form a hydrate contained in internal and/or external coagulating liquid.

BRIEF DESCRIPTION OF THE DRAWING

Figure 1 is a rough drawing, expressing the mechanism of forming pore in a hollow fiber membrane when a $CaCl_2$ solution is applied as internal coagulating liquid and/or external coagulating liquid.
1 : Surface of membrane2 : Hydrate of $CaCl_2$

DETAILED DESCRIPTION OF THE INVENTION

More concretely, the present invention is explained as follows. First of all, a spinning dope is prepared by dissloving a polysulfone based resin in an organic solvent and PVP is added into said organic solvent. In the process of preparing the spinning dope, other additives could be added thereto. The polysulfone based resin used in the present invention has a recurring unit represented by following formula. (I) or (II).

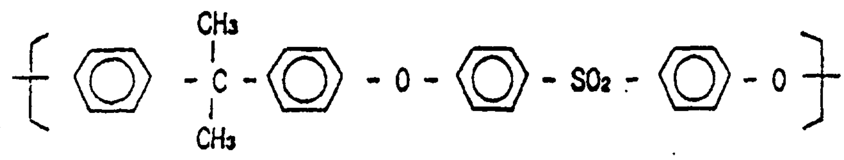
(I)

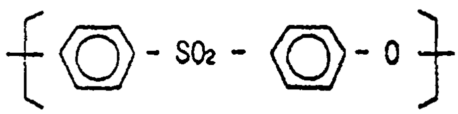
(II)

As organic solvent, m-cresol, N-methyl-2-pyrrolidone, dimethyl sulfoxide, dimethyl acetamide, dimethyl formamide and mixtures thereof are applied.
Inorganic salt, alcohol compound, polyethylene glycol, and polyvinyl alcohol, could be used as additives selectively.
It is desirable that the said spinning dope is composed of 10~50 weight% of polysulfone based resin, 20~89 weight% of organic solvent, and 1~30 weight% of additives comprising PVP. But, the present invention does not specifically restrict the component ratio of a spinning dope.

The next step is to prepare the polysulfone based hollow fiber membrane by spinning the spinning dope and the internal coagulating liquid through a biannular spinning nozzle to obtain the extrudate, and coagulating the extrudate in the external coagulating liquid, followed by washing, and winding. The biannular spinning nozzle has outside and inside diameter of 0.35mm and 0.15mm.

During the spinning process, the polymer is extruded at a speed of 2.5g/minute, and an air gap is maintained at a level of 10cm or so. An internal coagulating liquid and an external coagulating liquid is applied in the above process. In other words, at least one of the internal coagulating liquid and the external coagulating liquid is a solution comprising DEG and a salt which can form a hydrate. More preferably, at least one of the internal coagulating liquid and the external coagulating liquid is a water solution containing DEG and a salt which can form a hydrate. The said salt which can form a hydrate is $CaCl_2$, $ZnCl_2$, $MgSO_4$, $Na_2SO_4$, and the most desirable one is $CaCl_2$.

Before the spinning dope is coagulated, $CaCl_2$, $MgSO_4$, $Na_2SO_4$ and the like existing in the internal coagulating liquid and/or external coagulating liquid exist in a hydrated precipitation status because of hydrophobicity thereof (e.g. the hydrophobicity of the membrane itself) and accelerate to form pores in the membrane.

In this process a pore core grows to a certain size until the membrane coagulates completely. Consequently, the number of pores will be increased, and the size also will be similar. In this process, if a coagulation deferring material of the membrane (e.g. : Dimethylformamide) is added together with $CaCl_2$, it is possible to enlarge the pores to the desired size since the pores are getting bigger due to the deferred coagulation. However, the uniformity of the pores will be somewhat deteriorated. Therefore, it is possible to selectively add a membrane coagulation deferring material such as dimethylformamide into the internal coagulating liquid and/or external coagulating liquid depending on the separation material.

If a water solution containing a salt which cannot form hydrate, like NaCl, is applied to the internal coagulating liquid and/or external coagulating liquid, the salt in the coagulating liquid cannot pass through the membrane because of a repulsion force originated in the hydrophobicity of the spinning dope.

However, a salt which can form a hydrate like according to the present invention, removes the repulsion force, somewhat static electricity, by the hydration of the salt. As a result, it is possible that the salt passes through the membrane.

In the case that an internal coagulating liquid and/or external coagulating liquid, in which DEG is not contained, is applied, most of the PVP is leaked to the outside of the hollow fiber membrane during the coagulating and washing processes after spinning because of its' high solubility to water.

A little amount of PVP, which has not migrated to the outside of the polymer matrix during the process of spinning and coagulation remains inside of the hollow fiber membrane.

Especially, as the surface of said membrane is in directly contact with the external coagulating liquid and is coagulated rapidly, relatively much of the PVP shall remain in the surface rather than at the inside of the membrane.

According to the present invention, DEG contained in the internal coagulating liquid and/or external coagulating liquid deteriorates the solubility of PVP in the coagulating liquid and water, and elevates the affinity to the polysulfone based resin at the same time and therefore it enables to increase the remaining quantity of PVP in the polysulfone based hollow fiber membrane.

A complex is formed by hydrogen bonding between functional group of pyrrolidone and -OH functional group of DEG.

Once the complex of PVP and DEG is formed as aforesaid, the solubility of PVP in the coagulating liquid and water is reduced, and then a large quantity of PVP remains in the inside of the polysulfone based hollow fiber membrane.

In case, that the complex is not formed, the hydrophilic part of PVP remaining in the polymer matrix will be aggregated on the inside of the matrix, and the hydrophobic part of PVP remaining in the polymer matrix will be aggregated on the outside thereof by hydrophobicity itself of the polysulfone based resin.

As result, the separation process will be difficult.

Like in the present invention, however, if the internal coagulating liquid and/or external coagulating liquid contain DEG, the above said problem shall be solved because of the complex made by PVP and DEG. According to the present invention, it is possible to produce various polysulfone based hollow fibers having various properties by controlling the DEG content or salt content which can form hydrate added into the internal coagulating liquid and/or external coagulating liquid, and ultimately by controlling the pore size and the content of hydrophilic material remaining in the inside of the membrane.

More concretely, if the DEG content of the internal coagulating liquid and/or the external coagulating liquid is less than 90 weight%, or if the salt content which can form a hydrate is less than 40 weight%, the permeability, so called water permeability coefficient, will be lowered to some extent, but the separation capability will be improved. In this case, the produced polysulfone based hollow fiber membrane has the following properties;

- at least 0.01 mℓ/minute/kgf/cm$^2$ of water permeability coefficient,
- at least 80% of Cytochrome-C rejection rate, and

- at most 50% of Vitamin $B_{12}$ rejection rate.

In the mean time, if the DEG content of the internal coagulating liquid and/or the external coagulating liquid is at least 90 weight%, or if the content of the salt which can form a hydrate is at least 40 weight%, the permeability, so called water permeability coefficient, will be improved, but the separation capability will be lowered to some extent. In this case, the produced polysulfone based hollow fiber membrane has following properties;

- at least 0.15 mℓ/minute/kgf/$cm^2$ of water permeability coefficient,
- at most 30% of Cytochrome-C rejection rate, and
- at least 80% of Myoglobin rejection rate.

As the polysulfone based hollow fiber membrane produced according to the present invention has many similar-sized pores, it has excellent permeability and separation capability at the same time.
The fact that the pores formed in the membrane are similar, can be shown by the big difference of the respective rejection rates in measuring two kinds of separation material which has different molecular weights.
Because a polysulfone based hollow fiber membrane produced according to the present invention has a higher hydrophilicity, it has an excellent permeability compared to other membranes which have a similar rejection rate (in other words, which have a similar pore size). One can say, that the effectiveness of the separation process is improved without deteriorating the separation capability due to the elevated permeability of the hollow fiber membrane.
As it is possible to selectively reject material of a desired size from a solution, into which several materials have been mixed, polysulfone based hollow fiber membranes according to the present invention can be applied very effectively in the medical fields such as in an artificial kidney.
Water permeability coefficient and separation material rejection rate of the present invention shall be measured in the following manner:

· Evaluation of water permeability coefficient

Prepare a small glass tube like module by filling 20 ply of hollow fiber (length : 15cm). Then calculate the water permeability(mℓ /minute/kgf/$cm^2$) in maintaining the membrane pressure in-between at 1 kgf or so.

· Evaluation of separation material rejection rate

Measure the concentration of the material to be separated in water solution before and after permeating the hollow fiber membrane, and then calculate the separation material rejection rate by following equatation.

$$\text{Separation Material Rejection Rate(\%)} = \frac{A - B}{A} \times 100$$

In the above equation, A is the concentration of separation material in water solution before permeating the hollow fiber membrane, and B is the concentration of separation material in water solution after permeating the hollow fiber membrane.
More concretely, the present invention is illustrated by the following examples and comparative examples.

Example 1 (not according to the invention)

After adding 17 weight% of polysulfone resin(P-3500 : product of Amoco Co.), 10 weight% of polyvinyl pyrrolidone, and 9 weight% of polyethyleneglycol to 64 weight% of dimethylformamide, a transparent spinning dope is produced by mixing and dissolving.
The spinning dope is extruded through the external nozzle of a biannular spinning nozzle having 0.35mm outside diameter, and 0.15mm inner nozzle diameter at a speed of 2.5g/minute, and simultaneously a $CaCl_2$/water solution (30wt%/70 wt%) is extruded as the internal coagulating liquid through the internal nozzle of the biannular spinning nozzle at a speed of 2.4g/minute. After passing the extruded hollow fiber through a 10 cm air gap, a polysulfone hollow fiber is produced by coagulating and washing in water (external coagulating liquid), and winding at a speed of 50m/minute. A polysulfone hollow fiber membrane is produced by introducing the aforesaid polysulfone hollow fiber in a module. Measurement results of the separation capability and permeability of the produced polysulfone hollow fiber membrane are shown in Table 2.

Examples 2 ~ 6, and Comparative Examples1 ~ 4

A polysulfone hollow fiber membrane is produced according to the process and condition of Example 1, except the changes of composition of the internal coagulating liquid and/or external coagulating liquid as shown in Table 1. Measurement results of the separation capabilities and permeabilities of the produced polysulfone hollow fiber membranes are shown in Table 2.

**〈Table 1〉 Production Composition**

| | Internal Coagulating Liquid | External Coagulating Liquid |
|---|---|---|
| **Example 1*** | $CaCl_2$ / water Solution (30 wt% / 70 wt%) | Water |
| **Example 2*** | $CaCl_2$ / water Solution (30 wt% / 70 wt%) | $CaCl_2$ / water Solution (30 wt% / 70 wt%) |
| **Example 3*** | DEG / water Solution (80 wt% / 20 wt%) | Water |
| **Example 4*** | DEG / water Solution (80 wt% / 20 wt%) | DEG / water Solution (80 wt% / 20 wt%) |
| **Example 5*** | DEG / water Solution (95 wt% / 5 wt%) | Water |
| **Example 6** | $CaC_2$/DEG/Water Solution (4wt% / 90wt% / 6wt%) | Water |
| **Comparative Example 1** | Methanol | Water |
| **Comparative Example 2** | polyethylene glycol / water Solution (70 wt% / 30 wt%) | Water |
| **Comparative Example 3** | Dimethylform amide / water Solution (60 wt% / 40 wt%) | Water |
| **Comparative Example 4** | Dimethylform amide / water Solution (70 wt% / 30 wt%) | Water |
| * not according to the invention | | |

**〈Table 2〉 Result of measurement for separation capability and permeability**

| | Vitamin B12 Rejection Rate(%) [Molecular Weight: 1,300] | Cytochrome-C Rejection Rate(%) [Molecular Weight: 12,400] | Myoglobin Rejection Rate(%) [Molecular Weight: 18,800] | Water Permeable Coefficient [ml/min/kgf/cm$^2$] |
|---|---|---|---|---|
| **Example 1*** | 40 | 97 | - | 0.015 |
| **Example 2*** | 35 | 98 | - | 0.016 |
| **Example 3*** | 41 | 90 | - | 0.025 |
| **Example 4*** | 30 | 85 | - | 0.025 |
| **Example 5*** | - | 20 | 80 | 0.25 |
| **Example 6** | - | 15 | 85 | 0.21 |
| **Comparative Example 1** | 70 | 92 | - | 0.0082 |

(continued)

| | Vitamin B12 Rejection Rate(%) [Molecular Weight: 1,300] | Cytochrome-C Rejection Rate(%) [Molecular Weight: 12,400] | Myoglobin Rejection Rate(%) [Molecular Weight: 18,800] | Water Permeable Coefficient [ml/min/kgf/$cm^2$] |
|---|---|---|---|---|
| **Comparative Example 2** | 60 | 91 | - | 0.0093 |
| **Comparative Example 3** | - | 15 | 40 | 0.1 |
| **Comparative Example 4** | - | 5 | 10 | 0.2 |
| *not according to the invention | | | | |

Though all Cytochrome-C (molecular weight 12,400) rejection rates of the polysulfone hollow fiber membrane produced according to examples 1 ~ 4, and comparative examples 1 ~ 2 are over 80%, examples 1 ~ 4 show better permeabilities than comparative examples 1 ~ 2 due to higher water permeability coefficients.

In addition, though all Cytochrome-C (molecular weight 12,400) rejection rates of the polysulfone hollow fiber membranes produced according to examples 5 ~ 6, and comparative examples 3 ~ 4 are less than 30%, examples 5 ~ 6 show better selectivity than comparative examples 3 ~ 4 due to higher water permeability coefficients, and higher difference of rejection rates between two material which have different molecular weights.

Polysulfone based hollow fiber membranes produced according to the present invention not only have an excellent permeability due to the similar sized pores and existence of more hydrophilic material but also have an excellent separation capability due to the similar sized pores with higher water permeability coefficient than other hollow fiber membranes having similar sized pores.

## Claims

1. A process of producing a polysulfone based hollow fiber membrane using an internal coagulating liquid and an external coagulating liquid, wherein at least one of the internal coagulation liquid and the external coagulation liquid is a solution comprising diethylene glycol (DEG) and a salt which can form a hydrate, the process comprises the following steps:

    (a) Extruding a spinning dope comprising polysulfones resin, organic solvent and polyvinyl pyrrolidone (PVP) into air through a biannular spinning nozzle to obtain an extrudate in the form of a hollow fiber,
    (b) Simiultaneously injecting said internal coagulating liquid into the biannular spinning nozzle at the inside bore thereof, and
    (c) Subsequently introducing said extrudate to said external coagulating liquid.

2. A process of producing a polysulfone based hollow fiber membrane according to claim 1, wherein the said salt which can form a hydrate, is $CaCl_2$, $MgSO_4$, $Na_2SO_4$, and $ZnCl_2$.

3. A process of producing a polysulfone based hollow fiber membrane according to claim 1, wherein the said salt which can form a hydrate, is $CaCl_2$.

4. A process of producing a polysulfone based hollow fiber membrane according to claim 1, wherein the said internal coagulating liquid and/or external coagulating liquid is a water solution containing said diethylene glycol (DEG).

5. A process of producing a polysulfone based hollow fiber membrane according to claim 1, wherein the said internal coagulating liquid and/or external coagulating liquid is a water solution containing said salt which can form a hydrate.

6. A process of producing a polysulfone based hollow fiber membrane according to claim 1, wherein the said polysulfones resin is polysulfone resin or polyethersulfone resin.

7. A polysulfone based hollow fibre membrane obtainable by the process according to any one of claims 1 to 6.

## Patentansprüche

1. Verfahren zur Herstellung einer Hohlfasermembran auf Polysulfonbasis unter Verwendung einer internen Koagulationsflüssigkeit und einer externen Koagulationsflüssigkeit, wobei mindestens eine der internen Koagulationsflüssigkeit und der externen Koagulationsflüssigkeit eine Lösung ist, die Diethylenglykol (DEG) und ein Salz, das ein Hydrat bilden kann, umfasst, wobei das Verfahren die folgenden Schritte umfasst:

   (a) Extrudieren einer Spinnflüssigkeit, umfassend Polysulfonharz, organisches Lösungsmittel und Polyvinylpyrrolidon (PVP) in die Luft durch eine Doppelring-Spinndüse, um ein Extrudat in Form einer Hohlfaser zu erhalten,
   (b) gleichzeitig Injizieren der internen Koagulationsflüssigkeit in die Doppelring-Spinndüse an deren Innenbohrung, und
   (c) darauf folgend Einbringen des Extrudats in die externe Koagulationsflüssigkeit.

2. Verfahren zur Herstellung einer Hohlfasermembran auf Polysulfonbasis nach Anspruch 1, wobei das Salz, das ein Hydrat bilden kann, $CaCl_2$, $MgSO_4$, $Na_2SO_4$ und $ZnCl_2$ ist.

3. Verfahren zur Herstellung einer Hohlfasermembran auf Polysulfonbasis nach Anspruch 1, wobei das Salz, das ein Hydrat bilden kann, $CaCl_2$ ist.

4. Verfahren zur Herstellung einer Hohlfasermembran auf Polysulfonbasis nach Anspruch 1, wobei die interne Koagulationsflüssigkeit und/oder externe Koagulationsflüssigkeit eine das Diethylenglykol (DEG) enthaltende Wasserlösung ist.

5. Verfahren zur Herstellung einer Hohlfasermembran auf Polysulfonbasis nach Anspruch 1, wobei die interne Koagulationsflüssigkeit und/oder externe Koagulationsflüssigkeit eine das Salz, das ein Hydrat bilden kann, enthaltende Wasserlösung ist.

6. Verfahren zur Herstellung einer Hohlfasermembran auf Polysulfonbasis nach Anspruch 1, wobei das Polysulfonharz Polysulfonharz oder Polyethersulfonharz ist.

7. Hohlfasermembran auf Polysulfonbasis, erhältlich durch das Verfahren gemäß mindestens einem der Ansprüche 1 bis 6.

## Revendications

1. Un procédé de production d'une membrane à fibre creuse à base de polysulfone utilisant un liquide coagulant interne et un liquide coagulant externe, dans lequel au moins un parmi le liquide coagulant interne et le liquide coagulant externe est une solution comprenant du glycol de diéthylène (DEG) et un sel qui peut former un hydrate, le procédé comprenant les étapes suivantes :

   (a) extruder une solution à filer comprenant une résine de polysulfones, un solvant organique et du pyrrolidone de polyvinyle (PVP) dans de l'air à travers une filière bi-annulaire pour obtenir un produit d'extrusion sous la forme d'une fibre creuse,
   (b) injecter de façon simultanée le liquide coagulant interne dans la filière bi-annulaire à l'alésage intérieur de celle-ci,
   (c) introduire de façon subséquente le produit d'extrusion dans le liquide coagulant externe.

2. Un procédé de production d'une membrane à fibre creuse à base de polysulfone selon la revendication 1, dans lequel le sel qui peut former un hydrate est $CaCl_2$, $MgSO_4$, $Na_2SO_4$, et $ZnCl_2$.

3. Un procédé de production d'une membrane à fibre creuse à base de polysulfone selon la revendication 1, dans lequel le sel qui peut former un hydrate est $CaCl_2$.

4. Un procédé de production d'une membrane à fibre creuse à base de polysulfone selon la revendication 1, dans lequel le liquide coagulant interne et/ou le liquide coagulant externe est une solution aqueuse comprenant le glycol de diéthylène (DEG).

5. Un procédé de production d'une membrane à fibre creuse à base de polysulfone selon la revendication 1, dans lequel le liquide coagulant interne et/ou le liquide coagulant externe est une solution aqueuse comprenant le sel qui peut former un hydrate.

6. Un procédé de production d'une membrane à fibre creuse à base de polysulfone selon la revendication 1, dans lequel la résine de polysulfones est une résine de polysulfone ou une résine de polyéthersulfone.

7. Une membrane à fibre creuse à base de polysulfone pouvant être obtenue par le procédé selon l'une quelconque des revendications 1 à 6.

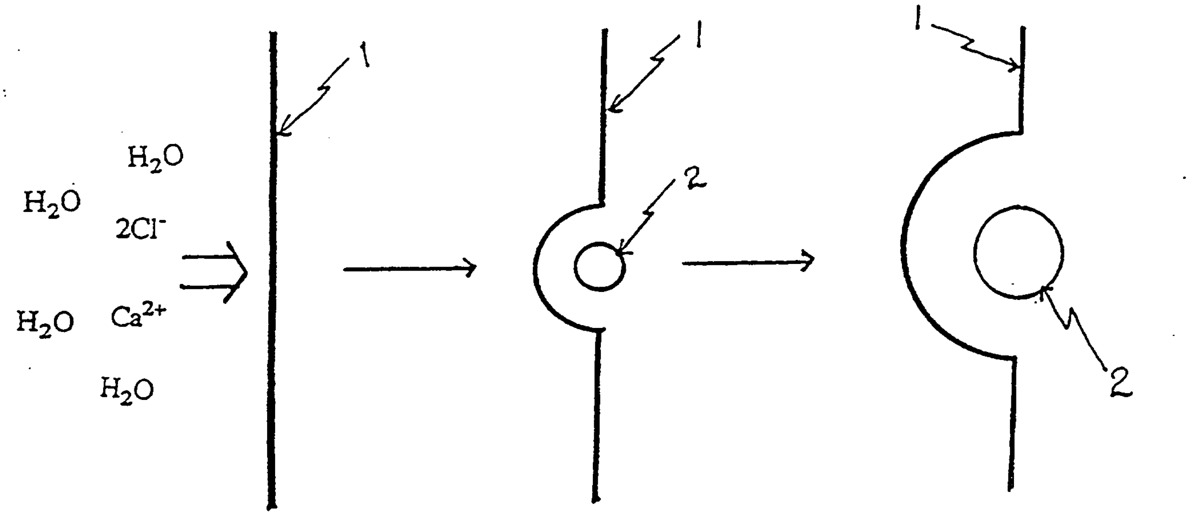


**Fig. 1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5340480 A
- EP 0568045 A
- JP 58104940 A
- JP 63097205 A
- JP 63097634 A
- US 5049276 A